# EUROPÄISCHE PATENTSCHRIFT

(11) **EP 1 000 127 B1**
(45) Veröffentlichungstag und Bekanntmachung des Hinweises auf die Patenterteilung: **20.08.2003**
(21) Anmeldenummer: 98937487.1
(22) Anmeldetag: 16.06.1998
(51) Int. Cl.: C09J 7/02, C09J 153/02

(54) **KLEBEBAND ZUM UMMANTELN VON LANGGESTRECKTEM GUT, WIE KABELSÄTZEN, KUNSTSTOFFPROFILEN OD. DGL.**
ADHESIVE TAPE FOR COVERING LONGITUDINALLY EXTENDED PRODUCTS SUCH AS LOOMS OF CABLES, PLASTIC PROFILED SECTIONS OR THE LIKE
BANDE ADHESIVE POUR ENROBER DES PRODUITS ALLONGES, COMME DES FAISCEAUX DE CABLES, DES PROFILES EN PLASTIQUE OU SIMILAIRE

(30) Priorität: 31.07.1997 DE 19732958
(43) Veröffentlichungstag der Anmeldung: 17.05.2000
(73) Patentinhaber: Coroplast Fritz Müller GmbH & Co. KG, 42279 Wuppertal (DE)
(72) Erfinder: LODDE, Christoph, D-44225 Dortmund (DE)
(74) Vertreter: Zapf, Christoph, Dipl.-Ing.
(86) Internationale Anmeldenummer: EP9803623
(87) Internationale Veröffentlichungsnummer: WO99006497

(56) Entgegenhaltungen:
- WO-A1-94/18281
- FR-A- 2 303 842
- GB-A- 2 057 916
- Polymer Science Dictionary, Mark S. M. Alger, S. 422"Rosin", Elsevier Science Publishers Ltd, New York (1989), XP002900252

## Beschreibung

Die vorliegende Erfindung betrifft ein Klebeband zum Ummanteln von langgestrecktem Gut, wie Kabelsätzen, Kunststoffprofilen od. dgl., mit einem durch zwei seitliche Kanten begrenzten bandförmigen Träger, der mindestens auf einer Seite mit einer selbstklebenden Klebeschicht versehen ist, die aus einem Haftklebstoff besteht.

Ein bekanntes derartiges Klebeband ist beispielsweise in dem deutschen Gebrauchsmuster DE 94 01 037 U1 beschrieben. Bei diesem Klebeband besteht der Träger aus einem Vliesmaterial, während die Klebeschicht vorteilhafterweise aus einem druckempfindlichen Haftklebstoff bestehen kann. Das Klebeband hat sich in der Praxis insbesondere beim Umwickeln von Kabelsätzen in Kraftfahrzeugen bewährt, da zur Erzielung eines ausgezeichneten Polstereffektes zur Unterbindung von Klappergeräuschen keine Schaumstoffumhüllung notwendig ist und sich das Klebeband ohne die Verwendung eines Interliners leicht von einer Rolle abziehen läßt. Das Klebeband wird zum Bandagieren spiralförmig um einen Kabelsatz gerollt.

Die für Klebebänder weithin verwendeten Haftklebstoffe sind viskoelastische Klebstoffe, die bei Raumtemperatur in lösungsmittelfreier Form permanent klebfähig bleiben und bei leichtem Anpreßdruck auf fast allen Substraten haften. Sie werden in der Regel als Lösung oder Dispersion auf ein Trägermaterial aufgebracht. Als Basis-Polymere moderner Haftklebstoffe werden dabei bekanntermaßen insbesondere Natur- und Synthese-Kautschuke, Polyacrylate, Polyester, Polychloroprene, Polyisobutene, wie cis-Polyisopren, Polyvinylether und Polyurethane in Kombination mit Zusätzen, wie Harzen, Weichmachern und Oxydationsinhibitoren, eingesetzt (vgl. Römpp Chemie Lexikon, 9. Auflage, Hrsg.: J. Falbe, M. Regitz; Stuttgart - New York, 1995, Bd. 3, S. 1704).

Für die Eigenschaften der entstehenden Klebeverbindung, wie beispielsweise für die Festigkeit oder das Dehnungsverhalten des Klebefilms, sind als wichtige Einflußgrößen die Grenzflächen- bzw., wenn es sich - wie in den meisten Fällen - um die Grenzfläche zu Luft handelt, die Oberflächenspannungen bzw. -energien, des Klebstoffs und der zu verklebenden Flächen von Bedeutung, die mit der jeweiligen Struktur sowie gegebenenfalls mit der vorhandenen Polarität der konstituierenden Bestandteile des Klebstoffs in der Klebeschicht und der zu verklebenden Oberflächen in kausaler Wechselbeziehung stehen.

Die herausragendste Rolle spielt für die Ausbildung einer Klebeverbindung die auftretende Adhäsion, die quantitativ durch die Adhäsionsenergie beschrieben werden kann. Gemäß DIN 53900 versteht man unter freier Adhäsionsenergie die für isotherm und reversibel durchgeführte Trennung zweier Phasen aufzuwendende Arbeit. Sie ist gleich der Summe der freien Benetzungsenergie und der freien Oberflächenenergie. Die Adhäsionsenergie wird damit u.a. von der chemischen Natur der Oberfläche, beispielsweise von der molaren Masse des Stoffes, aus dem sie besteht, von dessen Dichte und Kompressibilität, von der Temperatur und vom Vorhandensein elektrischer Ladungen, bedingt z.B. durch polare und unpolare Anteile im Molekülaufbau, bestimmt. Die Adhäsionsenergie steht in enger Wechselbeziehung sowohl zur Viskosität, als auch - gemäß der Gibbs-Thomson-Gleichung - mit dem chemischen Potential der Oberfläche. Sie ist eine spezifische, volumenbezogene Größe mit der Dimension eines Drukkes.

Der vorliegenden Erfindung liegt die Aufgabe zugrunde, ein Klebeband der eingangs genannten Art und ein entsprechendes Verfahren zum Ummanteln von langgestrecktem Gut, wie Kabelsätzen, Kunststoffprofilen od. dgl., mit einem Klebeband zu schaffen, die bei materialökonomisch günstigem Einsatz an Klebeband und einfach ablaufendem Ummantelungsvorgang des langgestreckten Gutes eine feste Klebeverbindung garantieren.

Diese Aufgabe wird mit einem Klebeband der eingangs genannten Art gelöst, bei dem der Haftklebstoff eine derartige chemische Zusammensetzung aufweist, daß sich bei Vorhandensein eines leichten Anpreßdruckes auf zwei aufeinander liegende selbstklebende Klebeschichten unter Auflösung der Grenzflächen und vollständiger Koaleszenz der Klebeschichten eine homogene Haftklebstoff-Masse bildet. Der Haftklebstoff hat die Zusammen setzung gemäß Anspruch 1

Das erfindungsgemäße Verfahren zeichnet sich dadurch aus, daß das langgestreckte Gut in Längsrichtung auf einen Abschnitt des Klebebandes auf eine mit einer selbstklebenden Klebeschicht versehene Seite eines bandförmigen Trägers des Klebebandes aufgelegt und danach das Klebeband derart verklebt wird, daß mindestens zwei Klebebereiche des bandförmigen Trägers auf der mit der Klebeschicht versehenen Seite derart gegeneinander geklebt werden, daß unter Auflösung von Grenzflächen der Klebeschicht eine homogene Masse entsteht.

Vorteilhafterweise werden gemäß der Erfindung zwei aneinander anliegende aus dem Haftkleber bestehende selbstklebende Schichten miteinander verklebt. Da es sich in der dadurch entstehenden Adhäsionsverbindung um gleichartige Adhärenden handelt, spricht man in diesem Fall vom Auftreten einer Autoadhäsion. Durch die erfindungsgemäß gewählte chemische Zusammensetzung des Haftklebers verwandelt sich diese Autoadhäsionsverbindung bei Vorhandensein eines leichten Anpreßdruckes jedoch sofort in eine Kohäsionsverbindung der Klebeschichten. Die auf dem bandförmigen Träger befindlichen Klebstoffschichten "verschweißen" gewissermaßen miteinander. Dieses "Selbstverschweißen" kann als eine intensive mikromechanische Verzahnung auf molekularer Ebene aufgefaßt werden. Bei diesem Vorgang lösen sich die ehemaligen Grenzflächen auf, und es entsteht aus den aneinandergefügten Klebstoffflächen eine homogene Masse. Damit entsteht mittels der erfindungsgemäßen, mit erheblichen Verarbeitungsvorteilen verbundenen Längsverklebungstechnik eine optimal feste Klebeverbindung. Ein Trennversuch hat aufgrund der vollständigen Koaleszenz der Klebeschichten immer einen Kohäsionsbruch zur Folge.

Wie oben aufgezeigt wurde, steht dieses Verhalten in Korrelation mit der chemischen Natur der Oberfläche, wie der molaren Masse, polaren und unpolaren Anteilen im Molekülaufbau bzw. dem chemischen Potential, mit physikalischen Eigenschaften, wie Dichte, Viskosität und Kompressibilität, und mit integralen Systemgrößen, wie z.B. der Temperatur.

Durch gezielte Klebstoffauswahl wird gemäß der Erfindung in der selbstklebenden Schicht ein derartiges Niveau der freien Adhäsionsenergie mit einem derartigen Verhältnis der freien Benetzungsenergie zur freien Oberflächenenergie des Haftklebstoffes erreicht, daß der Klebstoff des in besonderer Weise für die Längsverklebung geeigneten Klebebandes sowohl druckempfindlich ist, als auch eine sehr schnell eintretende "selbstverschweißende" Wirkung aufweist.

Ein solcher Haftklebstoff für die Klebeschicht kann mit Vorteil einen Natur- oder einen Synthesekautschuk enthalten.

Vornehmlich erfüllt ein Haftklebstoff diese Kriterien, der einen Butylkautschuk (IIR) und/oder Isoprenkautschuk (IR) und/oder Polyisobuten (IM), ein styrolhaltiges Copolymer sowie eine Natur- oder Kohlenwasserstoffharz-Komponente als Basisbestandteile enthält.

Weitere vorteilhafte Ausführungen der Erfindung sind in den Unteransprüchen und der nachfolgenden speziellen Beschreibung enthalten.

Anhand zweier in der beiliegenden Zeichnung dargestellter Ausführungsbeispiele wird die Erfindung näher erläutert. Dabei zeigen:
- Fig. 1: einen Abschnitt eines ersten Ausführungsbeispieles eines erfindungsgemäßen Klebebandes zum Ummanteln von langgestrecktem Gut mit einem dazwischen angeordneten Kabelsatz im Querschnitt und in vergrößerter Ansicht.
- Fig. 2: zwei Abschnitte eines zweiten Ausführungsbeispieles eines erfindungsgemäßen Klebebandes zum Ummanteln von langgestrecktem Gut mit einem dazwischen angeordneten Kabelsatz im Querschnitt und in vergrößerter Ansicht.

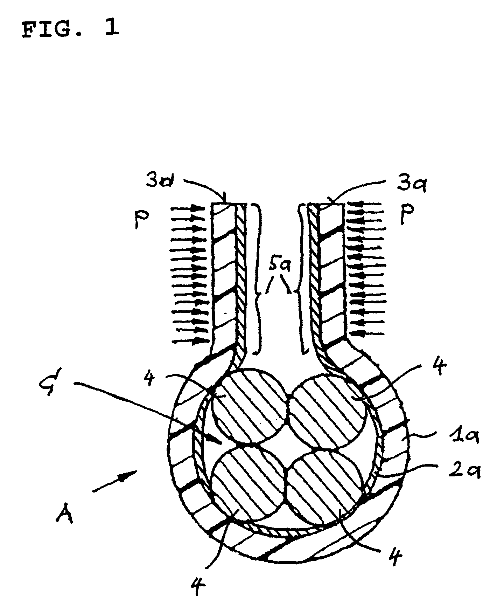

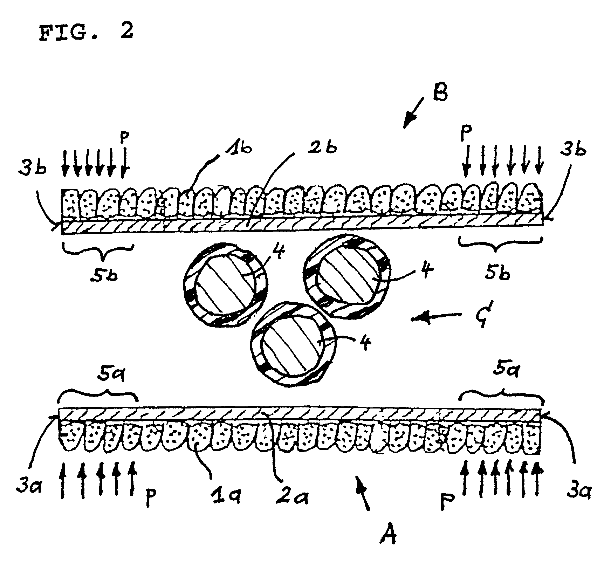

Wie aus Fig. 1 und 2 hervorgeht, weist ein erfindungsgemäßes Klebeband, von dem in Fig. 1 ein Abschnitt A und in Fig. 2 zwei Abschnitte A und B dargestellt sind, einen bandförmigen Träger 1a, 1b auf, der auf einer Seite mit einer Klebeschicht 2a, 2b versehen ist. Der Träger 1a, 1b ist durch zwei seitliche Kanten 3a, 3b begrenzt. Die Klebeschicht 2a, 2b besteht aus einem kautschukhaltigen Haftklebstoff.

Die gewählten Bezugszeichen der beiden Abschnitte A, B des Klebebandes enthalten für gleiche bzw. einander entsprechende Teile jeweils denselben Ziffernbestandteil sowie jeweils den Buchstaben-Zusatz "a" für den ersten Abschnitt A und den Zusatz "b" für den zweiten Abschnitt B.

In Fig. 1 umhüllt der Abschnitt A das darauf positionierte langestreckte Gut C, das im ersten Beispiel ein aus vier Kabeln 4 bestehender Kabelsatz ist. Zwei im Bereich der seitliche Kanten 3a liegende Abschnitte der Klebeschicht 2a, die zur Ausbildung von je einem Klebebereich 5a auf dem bandförmigen Träger 1a bestimmt sind, sind dabei einander zugewandt.

Fig. 2 zeigt den ersten Abschnitt A des Klebebandes unter dem langgestreckten Gut C liegend, das im zweiten Beispiel ein aus drei Kabeln 4 bestehender Kabelsatz ist. Über dem Kabelsatz ist der zweite Abschnitt B des Klebebandes angeordnet. Die beiden Abschnitte A, B des Klebebandes sind so angeordnet, daß die jeweiligen Seiten mit der Klebeschicht 2a, 2b einander zugewandt sind.

In beiden Ausführungen des Klebebandes besitzt der Haftklebstoff eine derartige chemische Zusammensetzung, daß sich bei Vorhandensein eines leichten Anpreßdruckes (in Richtung der Pfeile p in Fig. 1 und 2), wenn die Klebeschichten 2a, 2b aufeinander liegen, unter Auflösung der Grenzflächen und vollständiger Koaleszenz der Klebeschichten 2a, 2b eine homogene Haftklebstoff-Masse bildet.

Vorzugsweise kann der Haftklebstoff einen Butylkautschuk (IIR) und/oder Isoprenkautschuk (IR) und/oder Polyisobuten (IM), ein styrolhaltiges Copolymer sowie eine Natur- oder Kohlenwasserstoffharz-Komponente als Basisbestandteile enthalten.

Das styrolhaltige Copolymer ist ein SIS-Blockcopolymer mit einem Styrolgehalt von 15 bis 30 Prozent. Das SIS-Blockcopolymer mit seinen polaren aromatischen Gruppen, die durch sterische Behinderung eine Abnahme der Verschlaufungen in den Kautschukketten bewirken und die Ausbildung von intermolekularen Wechselwirkungen verstärken, trägt dabei in besonderer Weise zur Erhöhung des Adhäsionsvermögens und zur Festigkeit der Klebeverbindung bei.

Der Kautschuk hat eine mittlere relative molare Masse im Bereich von 20 000 bis 3 000 000 besitzen und insbesondere in zwei Fraktionen mit unterschiedlichen Bereichen der molaren Masse vorliegen.

Die Natur- oder Kohlenwasserstoffharz-Komponente sollte bevorzugterweise einen Erweichungspunkt im Bereich von 80 bis 105 °C besitzen.

Zur Verringerung einer Oxydation der Klebeschicht 2a, 2b kann der Haftklebstoff außerdem Antioxidantien enthalten, die insbesondere auf der Basis alkylierter Phenole hergestellt sind.

Folgende Klebstoffrezeptur hat sich unter diesen Gesichtspunkten als besonders geeignet erwiesen:

| Komponente | Masse-anteile |
|---|---|
| SIS-Blockcopolymer mit 15-30 % Styrolgehalt | 20-80 |
| Butylkautschuk mit einer mittleren molaren Masse von 300000 bis 3000000 | 20-80 |
| Butylkautschuk mit einer mittleren molaren Masse von 20000 bis 60000 | 0-20 |
| Kohlenwasserstoff-Harz oder Kolophoniumesterharz mit einem Erweichungspunkt 80-105°C | 40-100 |
| Antioxidantien auf Basis alkylierter Phenole | 1-5 |
| Füllstoffe | 10-80 |
| Flammschutzmittel | 0-60 |

Als Füllstoffe können beispielsweise Calciumcarbonat, Kreide oder Kaolin, mit einer geeigneten granulometrischen Zusammensetzung zum Einsatz kommen.

Flammschutzmittel können beispielsweise aus halogenhaltigen Substanzen, wie z.B. Chloroparaffinen oder bromierten Phenyloxiden, in Kombination mit einem Synergisten, wie z.B. Antimontrioxid, oder aus halogenfreien Substanzen, wie z.B. Ammonimpolyphosphaten, Magnesiumhydroxiden, Aluminiumhydroxiden oder auch Phosphorsäureestern bestehen. Dabei können verschiedene Substanzen in Kombination verwendet werden.

Als Vorzugsrezeptur für den Haftkleber wird eine Rezeptur entsprechend der nachstehenden Tabelle angesehen.

| Komponente | Masse-anteile |
|---|---|
| SIS-Blockcopolymer mit 15-30 % Styrolgehalt | 40-60 |
| Butylkautschuk mit einer mittleren molaren Masse von 300000 bis 3000000 | 30-50 |
| Butylkautschuk mit einer mittleren molaren Masse von 20000 bis 60000 | 10 |
| Kohlenwasserstoff-Harz oder Kolophoniumesterharz mit einem Erweichungspunkt 80-105°C | 60-100 |
| Antioxidantien auf Basis alkylierter Phenole | 2-4 |
| Füllstoffe | 40-60 |

Je nach Anforderungsprofil, z.B. in der Automobilindustrie, können durch verschiedene Kombinationen von diversen Trägern 1a, 1b und Klebeschichten 2a, 2b mit dem erfindungsgemäßen Klebeband weitere Vorteile erzielt werden, wie z.B. Temperaturbeständigkeiten von mindestens -40 °C bis +120 °C, vorzugsweise -40°C bis +90°C, für einen Belastungszeitraum von ca. 100 bis 20000 Stunden, vorzugsweise 1500 bis 3000 Stunden. Damit auch bei höheren Temperaturen eine ausreichende "Verschweißung" der Klebeschicht 2a, 2b garantiert ist, ist der Haftklebstoff dazu vorteilhafterweise in der Klebeschicht 2a, 2b mit einem spezifischen Flächengewicht von etwa 120 - 700 g/m², vorzugsweise von etwa 150 - 300 g/m², aufgetragen.

Als Materialien für den Träger 1a, 1b eignen sich z.B. Kunststoff-Folien (wie im ersten Ausführungsbeispiel in Fig. 1 dargestellt), Metallfolien, Papier, nichtgewebte Textilien wie Vliese und Gewebe, vorzugsweise Polyesterund Zellwollgewebe.

Durch Einsatz eines voluminösen Trägers 1a, 1b, z.B. eines textilen Träger 1a, 1b, wie eines Vlieses oder eines Schaumstoffträgers, können dem erfindungsgemäßen Klebeband geräuschdämmende Eigenschaften verliehen werden. Gemäß dem zweiten Ausführungsbeispiel ist in Fig. 2 beispielhaft ein Nähvlies als Material für den Träger 1a, 1b dargestellt, das insbesondere mit Flächengewichten > 100 g/m² mit Vorteil zum Einsatz gelangen kann.

Außerdem kann das erfindungsgemäße Klebeband auch als Abriebschutz eingesetzt werden, wenn die Klebeschicht 2a, 2b auf einen Träger 1a, 1b mit hoher Dichte und hohem Abriebwiderstand aufgebracht wird. Ein solches Material ist z.B. ein Chemiefasergewebe, das vorzugsweise aus Polyester bestehen kann.

Damit bestimmte Kabel 4 zusätzlich gegen elektromagnetische Strahlung abgeschirmt werden können, kann es des weiteren auch angebracht sein, Träger 1a, 1b mit besonderen Abschirmeigenschaften einzusetzen.

Dabei können auch Kombinationen aus den vorgenannten Materialien verwendet werden, die durch Extrusion, Koextrusion, Kaschierung oder durch andere Beschichtungsvorgänge, beispielsweise, wie sie bei der Beschichtung von Gewebe üblich sind, hergestellt werden. Der erfindungsgemäß verwendete Haftklebstoff läßt eine Vielzahl derartiger Kombinationen für den Träger 1a, 1b zu.

Die Klebeschicht 2a, 2b kann vorzugsweise als Hotmelt auf den bandförmigen Träger 1a, 1b aufgetragen werden. Es können aber auch andere Verfahren, wie z.B. Beschichtung mit gelösten Kautschuk-Klebern oder Kalandrieren von Kautschukmassen auf Gewebe zur Auftragung verwendet werden.

Die Fig. 1 und 2 veranschaulichen auch zwei Varianten der Durchführung des erfindungsgemäßen Verfahrens. Erfindungsgemäß wird zum Bündeln von langgestrecktem Gut C, wie der dargestellten Kabelsätze, mit einem Klebeband das langgestreckte Gut C in Längsrichtung auf einen Abschnitt A (oder B) des Klebebandes auf einer mit einer selbstklebenden Klebeschicht 2a (oder 2b) versehenen Seite eines bandförmigen Trägers 1a (oder 1b) positioniert und danach das Klebeband derart verklebt, daß mindestens zwei Klebebereiche 5a (und/oder 5b) des bandförmigen Trägers 1a (oder 1b) auf der mit der Klebeschicht 2a (oder 2b) versehenen Seite derart gegeneinander geklebt werden, daß unter Auflösung von Grenzflächen der Klebeschicht 2a (oder 2b) eine homogene Masse entsteht.

Die Klebebereiche 5a, 5b werden dabei vorzugsweise unter leichtem Druck p gegeneinander geklebt. Dadurch wird die notwendige Energie zur Aktivierung des "Verschweißungsvorganges" zwischen den aneinander anliegenden Oberflächen der Klebeschichten 2a, 2b aufgebracht.

Die Verklebung kann dabei, wie in Fig. 1 dargestellt, unter Verwendung nur eines Abschnitts A (oder auch B) des Klebebandes erfolgen. Nachdem auf dem Abschnitt A (oder B) das langgestreckte Gut C positioniert ist, wird der Abschnitt A (oder B) seitlich so um das Gut C geschlagen, daß Klebebereiche 5a (oder 5b) entstehen, die in jeweils einander gegenüberliegenden seitlichen Randbereichen des bandförmigen Trägers 1a (oder 1b) des Abschnittes A (oder B) liegen. Die Breite (Abstand zwischen den jeweiligen Kanten 3a-3a bzw. 3b-3b) des Klebebandes sollte dabei derart größer als eine zu umhüllende Abmessung des langgestreckten Gutes C sein, daß die seitlichen Kanten 3a (oder 3b) des bandförmigen Trägers 1a (oder 1b) vorzugsweise miteinander zur Deckung kommen und der Abschnitt A (oder B) des Klebebandes das langgestreckte Gut C vollkommen umhüllt. Die zu umhüllende Abmessung des Gutes C ergibt sich dabei im vorliegenden Fall aus der Anzahl und der Durchmessergröße der zu umhüllenden Kabel 4 des Kabelsatzes sowie aus der relativen Anordnung der Kabel 4 zueinander im Kabelsatz.

Es fällt auch in den Rahmen der Erfindung, wenn das langgestreckte Gut C, beispielsweise maschinell, etwa bei gleichzeitiger Faltung des Abschnitts A (oder B) des Klebebandes zwischen den einander zugewandten Abschnitten der Klebeschicht 2a positioniert wird.

In Fig. 2 ist als eine zweite mögliche Verfahrensvariante die Verwendung von zwei Abschnitten A, B des Klebebandes zum Ummanteln des langgestreckten Gutes C dargestellt. Dementsprechend wird ein zweiter Abschnitt B des Klebebandes, nachdem im Bereich des ersten Abschnittes A des Klebebandes das langgestreckte Gut C positioniert ist, mit seiner mit der selbstklebenden Klebeschicht 2b versehenen Seite auf das langgestreckte Gut C gebracht. Die Breite des Klebebandes (Abstand zwischen den jeweiligen Kanten 3a-3a bzw. 3b-3b) ist dabei derart größer als eine zu umhüllende Abmessung des langgestreckten Gutes C, daß Klebebereiche 5a, 5b jeweils in gegenüberliegenden seitlichen Randbereichen des bandförmigen Trägers 1a, 1b beider Abschnitte A, B entstehen und jeweils ein Klebebereich 5a des ersten Abschnittes A gegen einen Klebebereich 5b des zweiten Abschnittes B geklebt ist, wobei die seitlichen Kanten 3a des bandförmigen Trägers 1a des ersten Abschnittes A vorzugsweise mit den seitlichen Kanten 3b des bandförmigen Trägers 1b des zweiten Abschnittes B zur Deckung kommen und die beiden Abschnitte A, B des Klebebandes das langgestreckte Gut C vollkommen umhüllen.

Selbstverständlich ist es in umgekehrter Weise möglich, bei Verwendung beider dargestellter Abschnitte A und B des Klebebandes das langgestreckte Gut C auch zuerst auf den in Fig. 2 oben dargestellten (zweiten) Abschnitt B zu legen und diesen dann in der vorstehend beschriebenen Weise mit dem unteren (ersten) Abschnitt A zu verkleben. Ebenso fällt es in den Rahmen der Erfindung, wenn die beiden Abschnitte A, B, beispielsweise maschinell, nahezu gleichzeitig mit einander und mit dem langgestreckten Gut C zusammengebracht werden.

Für diese Längsverklebungstechnik, mit der bei sparsamen Materialeinsatz eine Verkürzung der für das Bündeln des langgestreckten Gutes notwendigen Zeit erreicht werden kann, ist das erfindungsgemäße Klebeband in ausgezeichneter Weise prädestiniert.

Die Erfindung beschränkt sich jedoch nicht auf das beschriebene Ausführungsbeispiel. So kann das erfindungsgemäße Verfahren auch mit einem Klebeband durchgeführt werden, dessen Klebstoffrezeptur von der oben - als besonders geeignet - beschriebenen abweicht. Beispielsweise muß es sich in der Klebeschicht 2a, 2b auch nicht um einen Haftklebstoff handeln, der kautschukhaltig ist.

Fernerhin ist zu erwähnen, daß die Klebeschicht 2a, 2b auf beiden Seiten des bandförmigen Trägers 1a, 1b aufgetragen werden kann. Auf diese Weise kann beim Ummanteln (Bandagieren, Bündeln) von langgestrecktem Gut C auch bei konventioneller spiralförmiger Wicklung des Klebebandes ein "Selbstverschweißen", und zwar der inneren und äußeren Lagen des Klebebandes, erreicht werden, wodurch eine Klebeverbindung entsteht, die sich im Vergleich mit herkömmlichen Klebebändern durch eine erhöhte Festigkeit auszeichnet.

## Patentansprüche

1. Klebeband zum Ummanteln von langgestrecktem Gut (C), wie Kabelsätzen, Kunststoffprofilen od. dgl., mit einem durch zwei seitliche Kanten (3a, 3b) begrenzten bandförmigen Träger (1a, 1b), der mindestens auf einer Seite mit einer selbstklebenden Klebeschicht (2a, 2b) versehen ist, die aus einem Haftklebstoff besteht, wobei der Haftklebstoff eine derartige chemische Zusammensetzung aufweist, daß sich bei Vorhandensein eines leichten Anpreßdruckes (p) auf zwei aufeinander liegende Klebeschichten (2a, 2b) unter Auflösung der Grenzflächen und vollständiger Koaleszenz der Klebeschichten (2a, 2b) eine homogene Haftklebstoff-Masse bildet,
**dadurch gekennzeichnet, daß** der Haftklebstoff 20-80 Masseanteile eines SIS-Blockcopolymers mit 15-30 % Styrolgehalt, 20-80 Masseanteile eines Butylkautschuks mit einer mittleren relativen molaren Masse von 300000 bis 300-0000, 0-20 Masseanteile eines Butylkautschuks mit einer mittleren relativen molaren Masse von 20000 bis 60000, 40-100 Masseanteile eines Kohlenwasserstoff- oder Kolophoniumesterharzes mit einem Erweichungspunkt im Bereich von 80-105 °C, 1-5 Masseanteile Antioxidantien, 10-80 Masseanteile Füllstoffe und bis zu 60 Masseanteile Flammschutzmittel enthält.

2. Klebeband nach Anspruch 1,
**dadurch gekennzeichnet, daß** der Haftklebstoff 40-60 Masseanteile eines SIS-Blockcopolymers mit 15-30 % Styrolgehalt, 30-50 Masseanteile eines Butylkautschuks mit einer mittleren relativen molaren Masse von 300000 bis 3000000, etwa 10 Masseanteile eines Butylkautschuks mit einer mittleren relativen molaren Masse von 20000 bis 60000, 60-100 Masseanteile eines Kohlenwasserstoff- oder Kolophoniumesterharzes mit einem Erweichungspunkt im Bereich von 80-105 °C, 2-4 Masseanteile Antioxidantien und 40-60 Masseanteile Füllstoffe enthält.

3. Klebeband nach Ansprüche 1 oder 2,
**dadurch gekennzeichnet, daß** der Haftklebstoff in der Klebeschicht (2a, 2b) mit einem spezifischen Flächengewicht von etwa 120 - 700 g/m², vorzugsweise von etwa 150 - 300 g/m², aufgetragen ist.

4. Klebeband nach einem der Ansprüche 1 bis 3,
**dadurch gekennzeichnet, daß** die Klebeschicht (2a, 2b) auf beiden Seiten des bandförmigen Trägers (1a, 1b) aufgetragen ist.

5. Klebeband nach einem der Ansprüche 1 bis 4,
**dadurch gekennzeichnet, daß** der bandförmige Träger (1a, 1b) aus Kunststoffund/oder Metallfolie, Schaumstoff, Papier, einem nichtgewebten Textil, wie einem Vlies, und/oder Gewebe, vorzugsweise Polyester- und Zellwollgewebe, besteht.

6. Klebeband nach einem der Ansprüche 1 bis 5,
**dadurch gekennzeichnet, daß** der bandförmige Träger (1a, 1b) aus einem Nähvlies, insbesondere mit einem Flächengewicht von mehr als 100 g/m², besteht.

7. Verfahren zum Ummanteln von langgestrecktem Gut (C), wie Kabelsätzen, Kunststoffprofilen od. dgl., mit einem Klebeband nach einem der Ansprüche 1 bis 6,
**dadurch gekennzeichnet, daß** das langgestreckte Gut (C) in Längsrichtung im Bereich eines Abschnittes des Klebebandes (A, B) auf einer mit einer selbstklebenden Klebeschicht (2a, 2b) versehene Seite eines bandförmigen Trägers (1a, 1b) des Klebebandes positioniert und danach das Klebeband derart verklebt wird, daß mindestens zwei Klebebereiche (5a, 5b) des bandförmigen Trägers (1a, 1b) auf der mit der Klebeschicht (2a, 2b) versehenen Seite derart gegeneinander geklebt werden, daß unter Auflösung von Grenzflächen der Klebeschicht (2a, 2b) eine homogene Masse entsteht.

8. Verfahren nach Anspruch 7,
**dadurch gekennzeichnet, daß** die Klebebereiche (5a, 5b) unter Druck (p) gegeneinander geklebt werden.

9. Verfahren nach Anspruch 7 oder 8,
**dadurch gekennzeichnet, daß** der Abschnitt (A, B) des Klebebandes, im wesentlichen nach der Positionierung des langgestreckten Gutes (C) im Bereich eines Abschnittes des Klebebandes (A, B), zum Verkleben seitlich um das langgestreckte Gut (C) geschlagen wird, wobei die Breite (Abstand 3a-3a, 3b-3b) des Klebebandes derart größer als eine zu umhüllende Abmessung des langgestreckten Gutes (C) ist, daß die Klebebereiche (5a, 5b) in jeweils einander gegenüberliegenden seitlichen Randbereichen des bandförmigen Trägers (1a, 1b) des Abschnittes (A, B) entstehen, wobei die seitlichen Kanten (3a, 3b) des bandförmigen Trägers (1a, 1b) vorzugsweise miteinander zur Deckung kommen und der Abschnitt (A, B) des Klebebandes das langgestreckte Gut (C) vollkommen umhüllt.

10. Verfahren nach Anspruch 7 oder 8,
**dadurch gekennzeichnet, daß** ein zweiter Abschnitt (B, A) des Klebebandes, im wesentlichen nach der Positionierung des langgestreckte Gutes (C) im Bereich eines Abschnittes des Klebebandes (A, B), zum Verkleben mit seiner mit der selbstklebenden Klebeschicht (2b, 2a) versehenen Seite derart auf das langgestreckte Gut (C) gebracht wird und die Breite des Klebebandes (Abstand 3b-3b, 3a-3a) derart größer als eine zu umhüllende Abmessung des langgestreckten Gutes (C) ist, daß Klebebereiche (5a, 5b) jeweils in gegenüberliegenden seitlichen Randbereichen des bandförmigen Trägers (1a, 1b) beider Abschnitte (A, B) entstehen, wobei jeweils ein Klebebereich (5a) des ersten Abschnittes (A) gegen einen Klebebereich (5b) des zweiten Abschnittes (B) geklebt ist, die seitlichen Kanten (3a) des bandförmigen Trägers (1a) des ersten Abschnittes (A) vorzugsweise mit den seitlichen Kanten (3b) des bandförmigen Trägers (1b) des zweiten Abschnittes (B) zur Deckung kommen und die beiden Abschnitte (A, B) des Klebebandes das langgestreckte Gut (C) vollkommen umhüllen.

## Claims

1. Adhesive tape for wrapping elongate product (C), such as cable looms, plastic profiled sections or the like, having a tapelike carrier (1a, 1b) bounded by two lateral edges (3a, 3b) and provided, at least on one side, with a self-adhesive layer (2a, 2b) which consists of a pressure-sensitive adhesive (PSA), the PSA having such a chemical composition that, with the existence of a slight contact pressure (p) on two adhesive layers (2a, 2b) lying on one another, with dissolution of the interfaces and complete coalescence of the adhesive layers (2a, 2b), a homogeneous PSA mass is formed,
**characterized in that** the PSA contains 20-80 mass fractions of a SIS block copolymer with 15-30% styrene content, 20-80 mass fractions of a butyl rubber with an average relative molar mass of 300 000 to 3 000 000, 0-20 mass fractions of a butyl rubber with an average relative molar mass of 20 000 to 60 000, 40-100 mass fractions of a hydrocarbon resin or colophony ester resin with a softening point in the range of 80-105°C, 1-5 mass fractions of antioxidants, 10-80 mass fractions of fillers, and up to 60 mass fractions of flame retardants.

2. Adhesive tape according to Claim 1,
**characterized in that** the PSA contains 40-60 mass fractions of a SIS block copolymer with 15-30% styrene content, 30-50 mass fractions of a butyl rubber with an average relative molar mass of 300 000 to 3 000 000, approximately 10 mass fractions of a butyl rubber with an average relative molar mass of 20 000 to 60 000, 60-100 mass fractions of a hydrocarbon resin or colophony ester resin with a softening point in the range of 80-105°C, 2-4 mass fractions of antioxidants, and 40-60 mass fractions of fillers.

3. Adhesive tape according to Claim 1 or 2,
**characterized in that** the PSA is applied in the adhesive layer (2a, 2b) with a specific weight per unit area of approximately 120-700 g/m², preferably of approximately 150-300 g/m².

4. Adhesive tape according to one of Claims 1 to 3,
**characterized in that** the adhesive layer (2a, 2b) is applied on both sides of the tapelike carrier (1a, 1b).

5. Adhesive tape according to one of Claims 1 to 4,
**characterized in that** the tapelike carrier (1a, 1b) is made of plastic film and/or metal foil, foam, paper, a nonwoven textile, such as a web, and/or woven fabric, preferably polyester and staple rayon fabric.

6. Adhesive tape according to one of Claims 1 to 5,
**characterized in that** the tapelike carrier (1a, 1b) is made of a stitchbonded web, in particular with a basis weight of more than 100 g/m².

7. Method of wrapping elongate product (C), such as cable looms, plastic profile sections or the like, with an adhesive tape according to one of Claims 1 to 6,
**characterized in that** the elongate product (C) is positioned in the longitudinal direction in the area of a section of the adhesive tape (A, B) on a side of a tapelike carrier (1a, 1b) of the adhesive tape which is provided with a self-adhesive layer (2a, 2b) and subsequently the adhesive tape is bonded in such a way that at least two adhesive areas (5a, 5b) of the tapelike carrier (1a, 1b) are adhered to one another on the side provided with the adhesive layer (2a, 2b) in such a way that a homogeneous mass is formed with dissolution of interfaces of the adhesive layer (2a, 2b).

8. Method according to Claim 7,
**characterized in that** the adhesive areas (5a, 5b) are adhered to one another under pressure (p).

9. Method according to Claim 7 or 8,
**characterized in that**, essentially after the positioning of the elongate product (C) in the area of a section of the adhesive tape (A, B), the section (A, B) of the adhesive tape is passed laterally around the elongate product (C) for the purpose of adhesive bonding, where the width (distance 3a-3a, 3b-3b) of the adhesive tape is so much larger than one dimension, intended for wrapping, of the elongate product (C) that the adhesive areas (5a, 5b) are formed in respectively mutually opposite lateral marginal areas of the tapelike carrier (1a, 1b) of the section (A, B), where the lateral edges (3a, 3b) of the tapelike carrier (1a, 1b) preferably coincide with one another, and the section (A, B) of the adhesive tape completely envelops the elongate product (C).

10. Method according to Claim 7 or 8,
**characterized in that**, essentially after the positioning of the elongate product (C) in the area of a section of the adhesive tape (A, B), a second section (B, A) of the adhesive tape is brought onto the elongate product (C) in such a way, by its side provided with the self-adhesive layer (2b, 2a), for the purpose of adhesive bonding, and the width of the adhesive tape (distance 3b-3b, 3a-3a) is so much larger than one dimension, intended for wrapping, of the elongate product (C), that adhesive areas (5a, 5b) are formed respectively in opposing lateral marginal areas of the tapelike carrier (1a, 1b) of both sections (A, B), where in each case an adhesive area (5a) of the first section (A) is adhered against an adhesive layer (5b) of the second section (B), the lateral edges (3a) of the tapelike carrier (1a) of the first section (A) preferably coincide with the lateral edges (3b) of the tapelike carrier (1b) of the second section (B), and the two sections (A, B) of the adhesive tape completely envelop the elongate product (C).

## Revendications

1. Bande adhésive pour envelopper un produit allongé (C), tel que des faisceaux de câbles, des profils en matériau synthétique ou analogues, présentant un support (1a, 1b) en forme de bande, délimité par deux bords latéraux (3a, 3b), qui est pourvu au moins d'un côté d'une couche autoadhésive (2a, 2b), qui est constituée d'un auto-adhésif, l'auto-adhésif présentant une composition chimique telle qu'il se forme, en présence d'une légère pression de compression (p) sur deux couches adhésives (2a, 2b) placées l'une sur l'autre, une masse autoadhésive homogène, avec dissolution des surfaces limites et coalescence complète des couches adhésives (2a, 2b), **caractérisée en ce que** l'auto-adhésif contient 20 à 80 parties en poids d'un copolymère à blocs de SIS présentant une teneur en styrène de 15 à 30%, 20 à 80 parties en poids d'un caoutchouc de butyle présentant une masse moléculaire relative moyenne de 300000 à 3000000, 0 à 20 parties en poids d'un caoutchouc de butyle présentant une masse moléculaire relative moyenne de 20000 à 60000, 40 à 100 parties en poids d'une résine d'hydrocarbure ou d'ester de colophonium présentant un point de ramollissement dans la plage de 80 à 105°C, 1 à 5 parties en poids d'antioxydants, 10 à 80 parties en poids de charges et jusqu'à 60 parties en poids d'agent de protection contre les flammes.

2. Bande adhésive selon la revendication 1, **caractérisée en ce que** l'autoadhésif contient 40 à 60 parties en poids d'un copolymère à blocs de SIS présentant une teneur en styrène de 15 à 30%, 30 à 50 parties en poids d'un caoutchouc de butyle présentant une masse moléculaire relative moyenne de 300000 à 3000000, environ 10 parties en poids d'un caoutchouc de butyle présentant une masse moléculaire relative moyenne de 20000 à 60000, 60 à 100 parties en poids d'une résine d'hydrocarbure ou d'ester de colophonium présentant un point de ramollissement de 80 à 105°C, 2 à 4 parties en poids d'antioxydants et 40 à 60 parties en poids de charges.

3. Bande adhésive selon les revendications 1 ou 2, **caractérisée en ce que** l'auto-adhésif dans la couche adhésive (2a, 2b) est appliquée avec un poids surfacique spécifique d'environ 120 à 700 g/m², de préférence d'environ 150 à 300 g/m².

4. Bande adhésive selon l'une quelconque des revendications 1 à 3, **caractérisée en ce que** la couche adhésive (2a, 2b) est appliquée sur les deux côtés du support (1a, 1b) en forme de bande.

5. Bande adhésive selon l'une quelconque des revendications 1 à 4, **caractérisée en ce que** le support (1a, 1b) en forme de bande est constitué d'une feuille en matériau synthétique et/ou en métal, de mousse, de papier, d'un textile non tissé, tel que du non-tissé et/ou de tissus, de préférence des tissus en polyester et en cellulose.

6. Bande adhésive selon l'une quelconque des revendications 1 à 5, **caractérisée en ce que** le support (1a, 1b) en forme de bande est constitué d'un non-tissé cousu, présentant en particulier un poids surfacique supérieur à 100 g/m².

7. Procédé pour envelopper un produit allongé (C), tel que des faisceaux de câbles, des profils en matériau synthétique ou analogues avec une bande adhésive selon l'une quelconque des revendications 1 à 6, **caractérisé en ce que** le produit allongé (C) est positionné dans le sens longitudinal dans la zone d'une section de la bande adhésive (A, B) sur un côté du support (1a, 1b) en forme de bande pourvu d'une couche autoadhésive (2a, 2b) et la bande adhésive est ensuite collée de telle manière qu'au moins deux zones adhésives (5a, 5b) du support (1a, 1b) en forme de bande sont collées sur le côté pourvu de la couche adhésive (2a, 2b) de telle manière qu'il se forme une masse homogène avec dissolution des surfaces limites de la couche adhésive (2a, 2b).

8. Procédé selon la revendication 7, **caractérisé en ce que** les zones adhésives (5a, 5b) sont collées l'une contre l'autre sous pression (p).

9. Procédé selon la revendication 7 ou 8, **caractérisé en ce que** la section (A, B) de la bande adhésive est retournée pour le collage, essentiellement après le positionnement du produit allongé (C) dans la zone d'une section de la bande adhésive (A, B), latéralement autour du produit allongé (C), la largeur (distance 3a-3a, 3b-3b) de la bande adhésive étant supérieure à une dimension à envelopper du produit allongé (C), **en ce que** les zones adhésives (5a, 5b) se forment dans à chaque fois des zones de bord latérales se trouvant l'une en face de l'autre du support (1a, 1b) en forme de bande de la section (A, B), les bords latéraux (3a, 3b) du support (1a, 1b) en forme de bande étant de préférence recouverts l'un par l'autre et la section (A, B) de la bande adhésive entourant complètement le produit allongé (C).

10. Procédé selon la revendication 7 ou 8, **caractérisé en ce qu'**une deuxième section (B, A) de la bande adhésive est appliquée pour le collage, essentiellement après le positionnement du produit allongé (C) dans la zone d'une section de la bande adhésive (A, B), avec son côté pourvu de la couche autoadhésive (2b, 2a) sur le produit allongé (C) et la largeur de la bande adhésive (distance 3b-3b, 3a-3a) étant supérieure à une dimension à envelopper du produit allongé (C) de telle manière que des zones adhésives (5a, 5b) se forment à chaque fois dans des zones de bord latérales du support (1a, 1b) en forme de bande des deux sections (A, B), une zone adhésive (5a) de la première section (A) étant à chaque fois collée contre une zone adhésive (5b) de la deuxième section (B), les bords latéraux (3a) du support (1a) en forme de bande de la première section (A) étant de préférence recouverts par les bords latéraux (3b) du support (1b) en forme de bande de la deuxième section (B) et les deux sections (A, B) de la bande adhésive entourant complètement le produit allongé (C).
